# EUROPÄISCHE PATENTANMELDUNG

(11) **EP 0 522 313 A1**
(43) Veröffentlichungstag der Anmeldung: **13.01.1993**
(21) Anmeldenummer: 92110018.6
(22) Anmeldetag: 13.06.1992
(51) Int. Cl.: B32B 5/26, B32B 17/02, B32B 29/02

(54) **Flächiger Verbundwerkstoff**

(30) Priorität: 06.07.1991 DE 4122480
(71) Anmelder: BASF Aktiengesellschaft, D-67063 Ludwigshafen (DE)
(72) Erfinder: Wahl, Ludwig, W-6707 Schifferstadt (DE); Schlarb, Alois, Dr., W-6710 Frankenthal (DE); Baumgartl, Horst, Dr., W-6500 Mainz 1 (DE); Ittemann, Peter, Dr., W-6800 Mannheim 31 (DE)

(57) **Zusammenfassung**

Die Erfindung betrifft einen flächigen Verbundwerkstoff aus einer Thermoplastmatrix und Glasfasermatten als Verstärkungsmaterial, der an seiner Oberfläche mit Schichten aus hochsaugfähigem Papier versehen ist. Der Verbundwerkstoff kann zu Formteilen weiterverarbeitet werden, die insbesondere in der Automobilindustrie Anwendung finden.

## Beschreibung

Die Erfindung betrifft einen flächigen Verbundwerkstoff aus einer Thermoplastmatrix und Glasfasermatten, der mit Oberflächenschichten versehen ist.

Flächige Verbundwerkstoffe auf Basis von glasmattenverstärkten Thermoplasten (GMT) sind bekannt. Sie können z. B. nach DE-B 23 12 816 oder DE-B 29 48 235 durch Tränken von Glasfasermatten mit einer Thermoplast-Schmelze auf einer Doppelbandpresse hergestellt werden. Zuschnitte aus solchen Werkstoffen werden zu Formteilen weiterverarbeitet, indem man sie auf Temperaturen oberhalb des Erweichungspunktes des Thermoplasten erhitzt und anschließend in Formen, die eine Temperatur unterhalb des Erweichungspunktes des Thermoplasten haben, verformt. Die so hergestellten Formteile weisen auch bei optimaler Verfahrensweise eine rauhe, faserhaltige Oberfläche auf, wodurch die Anwendung dieser Materialien stark eingeschränkt ist.

Besonders gravierend ist diese Erscheinung beim sogenannten "Formpreß-GMT", bei dem bevorzugt chemisch gebundene Glasmatten eingesetzt werden, die sehr biegesteif sind. Diese Biegesteifigkeit führt dazu, daß sich die Fasern beim Tränkprozeß durchdrücken, so daß einzelne Fasern durch die Oberfläche des Formteils ragen und zu einer ungenügenden optischen Oberflächenqualität führen.

Eine Möglichkeit, die Oberflächenqualität zu verbessern, besteht darin, daß man bei der Herstellung des Verbundwerkstoffs in der Doppelbandpresse an der Ober- und Unterseite dünne Vliese aus Glasfasern mit einer Flächenmasse von etwa 25 g·m⁻² zuführt. Derartige Glasfaservliese sind aber sehr teuer.

Der Erfindung lag also die Aufgabe zugrunde, flächige Verbundwerkstoffe auf Basis von glasmattenverstärkten Thermoplasten bereitzustellen, deren Oberfläche auf einfache und kostengünstige Weise verbessert wurde.

Diese Aufgabe wird erfindungsgemäß durch Oberflächenschichten aus hochsaugfähigem Papier einer Flächenmasse von 15 bis 50 g·m⁻² gelöst.

Für die Thermoplastmatrix kommen die üblichen Polymeren in Frage, wie Polyolefine, Polyamide und thermoplastische Polyester. Ihre Verarbeitungstemperatur sollte niedriger als etwa 280°C sein, da sonst eine Schädigung des Papiers eintreten kann. Bevorzugt ist Polypropylen mit einem MFI zwischen 6 und 300 g/10 min (bei 230°C/2, 16 kg). Aber auch entsprechende Copolymerisate und Pfropfcopolymerisate des Propylens sind geeignet. Dem Thermoplasten kann bis zu 10 % seines Gewichts Rezyklat von aufgearbeiteten GMT-Abfällen zugesetzt werden. Dies enthält etwa 20 bis 50 Gew.-% Kurzglasfasern.

Besonders wirksam ist die erfindungsgemäße Oberflächenveredlung beim Einsatz von biegesteifen Glasfasermatten, die bei der Herstellung von Formpreß-GMT verwendet werden. Daraus hergestellte Formteile weisen eine besonders hohe Zähigkeit und dementsprechend ein gutes Crash-Verhalten auf. Biegesteife Glasfasermatten können entweder durch chemische Bindung oder durch Nadeln der Glasfasern bei der Mattenherstellung erzeugt werden. Als chemische Binder kommen Acrylatharze und insbesondere Epoxidharze in Mengen von 5 bis 15 Gew.-% in Frage. Grundsätzlich ist die Erfindung auch beim sogenannten Fließpreß-GMT anwendbar, wo weniger biegesteife, dafür aber fließfähige Glasfasermatten eingesetzt werden, die durch übliches Nadeln hergestellt werden. Die Glasfasermatten weisen gewöhnlich eine Flächenmasse von 150 bis 1500 g·m⁻², vorzugsweise von 250 bis 1200 g·m⁻² auf.

Das Verhältnis Thermoplast zu Glasfasern wird so gewählt, daß der Glasgehalt des Verbundwerkstoffs von 20 bis 50 Gew.-% beträgt.

Bei der Herstellung des Verbundwerkstoffs kann der thermoplastische Kunststoff in verschiedener Form der Doppelbandpresse zugeführt werden. Bevorzugt wird er als extrudierte Schmelze zugeführt; man kann aber auch Folien oder eine Kombination von Schmelze mit Folien zuführen, die dann im Einzugsbereich der Presse aufgeschmolzen werden. In der Doppelbandpresse werden die Faserbündel mit der Thermoplastschmelze imprägniert. Dies geschieht bei einem Druck zwischen 0,1 und 25 bar, vorzugsweise zwischen 1 und 5 bar. Die Temperatur soll so hoch sein, daß der Thermoplast als Schmelze vorliegt, d. h. sie liegt mehr als 10, vorzugsweise 20 bis 120°C über dem Schmelzpunkt des Thermoplasten. Die Verweilzeit auf der Doppelbandpresse beträgt 30 sec bis 20 min, vorzugsweise 2 min bis 10 min. Die Doppelbandpresse weist eine Kühlzone auf, in welcher der Verbund auf Temperaturen unterhalb des Schmelzpunktes abgekühlt und dadurch verfestigt wird.

Bei der Herstellung der erfindungsgemäßen Verbundwerkstoffe werden nun in der Doppelbandpresse oben und unten jeweils eine Bahn aus hochsaugfähigem Papier zugeführt, welches eine Flächenmasse von 15 bis 50 g·m⁻² aufweist. Das Papier soll möglichst großporig sein, so daß es von der Thermoplastschmelze durchdrungen oder zumindest gut benetzt werden kann. Diese Papierschicht verhindert, daß beim Tränkprozeß bzw. bei der Verarbeitung einzelne Glasfaserspitzen die GMT-Oberfläche durchdringen.

In vielen Fällen, insbesondere bei der Herstellung von Formpreß-GMT, ist es zweckmäßig, daß die Papierschichten eine 20 - 300, vorzugsweise 40 - 120 µm dicke Außenhaut aus dem Matrixthermoplasten aufweisen. Diese Außenhaut kann entweder dadurch aufgebracht werden, daß man bei der Halbzeugherstellung auf der Doppelbandpresse außen Thermoplastfolien zuführt oder daß man mit Thermoplasten beschichtetes Papier verwendet. Diese Thermoplastaußenhaut bewirkt eine weitere Verbesserung der Oberflächenqualität.

Die erfindungsgemäßen Verbundwerkstoffe können zugeschnitten und nach üblichen Methoden durch Pressen oder Tiefziehen bei Temperaturen oberhalb des Erweichungsbereichs des Thermoplasten zu Formteilen verarbeitet werden, die z. B. in der Automobilindustrie, im Maschinenbau und für Haushaltsgeräte Anwendung finden.

## Patentansprüche

1. Flächiger Verbundwerkstoff, enthaltend eine Thermoplastmatrix und Glasfasermatten als Verstärkungsmaterial, dadurch gekennzeichnet, daß er beidseitig mit Oberflächenschichten aus hochsaugfähigem Papier einer Flächenmasse von 15 bis 50 g·m⁻² versehen ist.

2. Flächiger Verbundwerkstoff nach Anspruch 1, dadurch gekennzeichnet, daß die Papierschichten eine 20 - 200 µm dicke Außenhaut aus dem Matrixthermoplasten aufweisen.

3. Flächiger Verbundwerkstoff nach Anspruch 1, dadurch gekennzeichnet, daß der Matrixthermoplast ein Propylenpolymerisat ist.

4. Flächiger Verbundwerkstof nach Anspruch 1, dadurch gekennzeichnet, daß die Glasfasermatten mit 5 bis 15 Gew.-% eines gehärteten Epoxidharzes chemisch gebunden sind.
